# EUROPEAN PATENT SPECIFICATION

(11) **EP 2 746 560 B1**
(45) Date of publication and mention of the grant of the patent: **05.08.2015**
(21) Application number: 12198614.5
(22) Date of filing: 20.12.2012
(51) Int. Cl.: F02M 21/04, F02D 9/16, F02M 13/08, F02M 9/08

(54) **Gas mixer for internal combustion engine**
Gasmischer für einen Verbrennungsmotor
Mélangeur de gaz pour moteur à combustion interne

(43) Date of publication of application: 25.06.2014
(73) Proprietor: Caterpillar Energy Solutions GmbH, 68167 Mannheim (DE)
(72) Inventor: Reitz, Harald, 68169 Mannheim (DE)
(74) Representative: Kramer Barske Schmidtchen Patentanwälte PartG mbB

(56) References cited:
- DE-A1- 19 612 401
- US-A- 6 026 787
- US-A1- 2011 226 218

## Description

### Technical Field

The present disclosure generally refers to gas mixers for internal combustion engines, and more particularly to gas mixers for gaseous fuel internal combustion engines for mixing gaseous fuel and air.

### Background

Gaseous fuel internal combustion engines (also referred to as gas engines) are internal combustion engines running on gaseous fuel such as propane, natural gas, landfill gas, coal gas, and biogas.

Gas mixers are fluidly connected to a combustion unit of the gaseous fuel internal combustion engine to supply a mixture of gaseous fuel and air for firing. Gas mixers are used for mixing gaseous fuel and air having a desired air fuel ratio (AFR) such that the gaseous fuel internal combustion engine is operated in a desired operating range.

For example, DE 41 37 573 Al discloses a venturi mixer to mix gas and air in combustion engines. The venturi mixer may have a central pipe with a venturi shaped profile and a displacement body arranged therein. Gaseous fuel may enter the central pipe through a circumferential slot close to the venturi constriction. Axial displacement of the displacement body may result in an adjustment of an air flow and/or a gaseous fuel flow within a predetermined range of possible AFRs.

As a further example, DE 196 12 401 A1 discloses a device for supplying an air fuel mixture for gaseous fuel engines. The device comprises a housing including an air inlet, a gaseous fuel inlet, and a mixture outlet. The device further comprises an axially displaceable throttle slide with an inner gaseous fuel channel. A tear-off edge is provided at an end of the throttle slide to generate a stall and, thereby, turbulences in a mixing space leading to a negative pressure for carrying along and swirling gaseous fuel from the inner gaseous fuel channel of the throttle slide.

To facilitate operation of gaseous fuel internal combustion engines with different gaseous fuel types having unequal calorific values, gas mixers have to provide various AFRs. For instance, a gaseous fuel internal combustion engine which runs on propane having a high calorific value of 93 MJ/m³ under standard reference conditions may be supplied with air fuel mixture having an AFR being lower than an AFR of an air fuel mixture supplied to a gaseous fuel internal combustion engine which runs on lean gas having a calorific value below 8.5 MJ/m³ under standard reference conditions.

When changing operation of gaseous fuel internal combustion engines between gaseous fuel types having different calorific values, depending on the difference between said calorific values, a displacement body within the gas mixer may have to be changed if the desired AFR exceeds the predetermined range of possible AFRs.

The present disclosure is directed, at least in part, to improving or overcoming one or more aspects of prior systems.

### Summary of the Disclosure

In one aspect, the present disclosure relates to a gas mixer according to claim 1.

Other features and aspects of this disclosure will be apparent from the following description and the accompanying drawings.

### Brief Description of the Drawings

Fig. 1 shows an schematic diagram of an exemplary disclosed gaseous fuel internal combustion engine;
Fig. 2 is a sectional view of an exemplary disclosed gas mixer with a displacement body in a first position;
Fig. 3 is a sectional view of an exemplary disclosed gas mixer with a displacement body in another position than in shown in Fig. 2;
Fig. 4 is a sectional view of an exemplary disclosed gas mixer with a displacement body in yet another position than in shown in Fig. 2 and 3; and
Fig. 5 is a co-ordinate system illustrating operation of an exemplary disclosed gas mixer shown in Figs. 2 to 4.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based in part on the realization that a gas mixer including a displacement body that is displaceable into a mixing passage may facilitate adjustment of air flow and gaseous fuel flow over a wide range to adjust an AFR over a wide range. That is, the same displacement body may be used for numerous gaseous fuel types having different specific calorific values and requiring the gaseous fuel internal combustion engine to operate with different AFRs.

The present disclosure may be further based in part on the realization that said gas mixer may facilitate a synchronous adjustment of air flow and gaseous fuel flow by utilization of a sole adjusting unit. If using a sole adjusting unit, a displacement of the displacement body causes a direct adjustment of both air flow and gaseous fuel flow by utilization of a sole displaceable member, namely the displacement body.

The present disclosure may be further based in part on the realization that said gas mixer may facilitate adjustment of a flow area of the air flow during operation of a gaseous fuel internal combustion engine to minimize a pressure drop across the gas mixer which may increase efficiency of the gaseous fuel internal combustion engine.

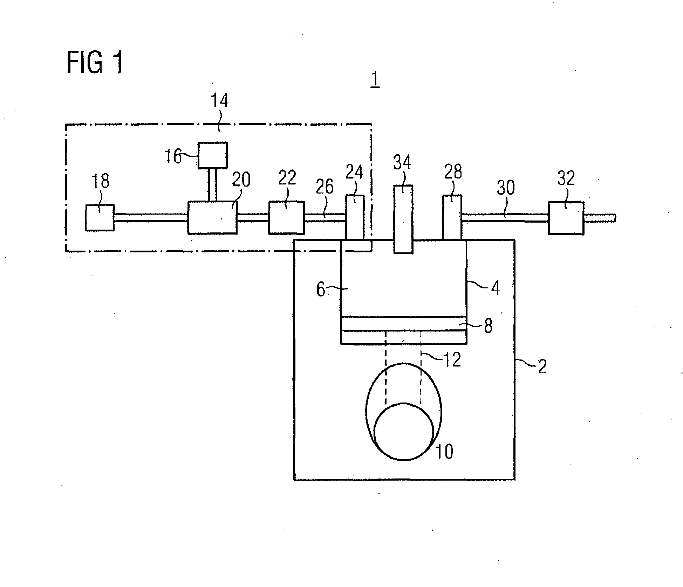

Referring now to the drawings, an exemplary embodiment of a gaseous fuel internal combustion engine 1 is illustrated in Fig. 1. Gaseous fuel internal combustion engine 1 may include features not shown, such as fuel systems, air systems, cooling systems, peripheries, drivetrain components, etc. For the purposes of the present disclosure, gaseous fuel internal combustion engine 1 is considered as a four-stroke gaseous fuel internal combustion engine. One skilled in the art will recognize, however, that gaseous fuel internal combustion engine 1 may be any type of engine (e.g., turbine, dual fuel, gaseous fuel, etc.) that would utilize a gas mixer. Furthermore, gaseous fuel internal combustion engine 1 may be of any size, with any number of cylinders, and in any configuration (e.g., "V," in-line, radial, etc.). Gaseous fuel internal combustion engine 1 may be used to power any machine or other device, including locomotive applications, on-highway trucks or vehicles, off-highway trucks or machines, earth moving equipment, generators, aerospace applications, marine applications, offshore applications, pumps, stationary equipment, or other engine powered applications.

Referring to Fig. 1, gaseous fuel internal combustion engine 1 is suited to essentially any application wherein an internal combustion power source is desired, and is particularly well suited to applications wherein it is desirable to limit emissions of certain pollutants, such as NOₓ compounds.

Gaseous fuel internal combustion engine 1 comprises an engine block 2, at least one cylinder 4 providing at least one combustion chamber 6 for combusting fuel, a piston 8, and a crank-shaft 10 connected to the piston 8 via a piston rod 12. Piston 8 is configured to reciprocate within the cylinder 4.

Gaseous fuel internal combustion engine 1 further comprises an air - fuel supply system 14 comprising a fuel source 16, an air inlet 18, a gas mixer 20, an intake manifold 22, an intake valve 24, and an intake pathway 26. The intake valve 24 is fluidly connected to combustion chamber 6. Intake valve 24 is configured to enable injection of compressed charge air and/or a mixture of compressed charge air and gaseous fuel into combustion chamber 6. After combusting the gas mixture, the exhaust gas is released out of the combustion chamber 6 via an outlet valve 28 into an exhaust gas outlet pathway 30, which may be fluidly connect to an associated exhaust gas system 32 for treating the exhaust gas, for example, a catalyst reducing pollutant emissions. Outlet valve 28 is also fluidly connected to combustion chamber 6.

Gaseous fuel internal combustion engine 1 may be a direct or port injection engine, or may include a pre-combustion chamber. Gaseous fuel internal combustion engine 1 may further include an exhaust gas recirculation system that may be operable to recirculate exhaust gas.

Those skilled in the art will appreciate that the compression ratio of gaseous fuel internal combustion engine 1 is insufficient to cause compression ignition of gaseous fuel in combustion chamber 6. Instead, each cylinder 4 of gaseous fuel internal combustion engine 1 is equipped with a spark plug 34.

A gas mixer 20 is provided and preferably disposed upstream intake manifold 22 that supplies a combustion mixture to engine block 2 and associated cylinder 4. In particular, gas mixer 20 is configured to provide a mixture of gaseous fuel and air having a predetermined AFR. Gas mixer 20 may communicate with an electronic control module via a communication line, which in turn provides electronic signals to gas mixer 20 to control, for example, the AFR. The electronic control module may be further configured to control the overall operation of gaseous fuel internal combustion engine 1. To control operation of gaseous fuel internal combustion engine 1, the electronic control module may be further connected to various sensors to measure parameters such as combustion mixture pressure/temperature, combustion peak pressure, exhaust gas temperature/pressure, and lambda.

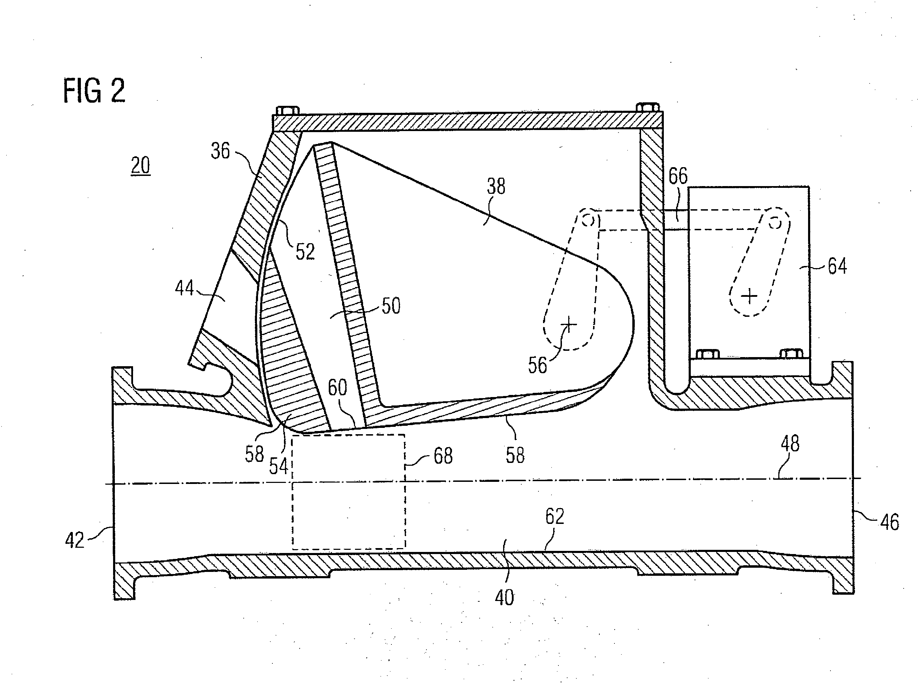

Referring now to Fig. 2, an exemplary gas mixer 20 as shown in Fig. 1 is described in greater detail.

Gas mixer 20 comprises a housing 36, a displacement body 38, and a mixing passage 40.

Housing 36 has an air inlet 42, a gaseous fuel inlet 44 and mixture outlet 46. Mixing passage 40 extends between air inlet 42 and mixture outlet 46 within housing 36. In the shown embodiment, mixing passage 40 extends along a central longitudinal axis 48 between air inlet 42 and mixture outlet 46. Alternatively, mixing passage 40 may have a different course such as a curved course along a curved axis.

Displacement body 38 is arranged in housing 36 and displaceable into mixing passage 40. As can be seen, displacement body 38 partially forms part of mixing passage 40. Specifically, an immersion section outer wall 58 may partially form part of mixing passage 40.

An inner fuel channel 50 for guiding gaseous fuel extends through displacement body 38 to fluidly interconnect gaseous fuel inlet 44 in housing 36 and mixing passage 40 in dependence of a displacement of displacement body 38 as is described in greater detail hereinafter. Inner fuel channel 50 may be, for example, funnel shaped.

Inner fuel channel 50 includes a channel inlet 52 that is adapted to overlap gaseous fuel inlet 44 in dependence of a displacement of displacement body 38. Furthermore, displacement body 38 includes an immersion section 54 adapted to immerse into mixing passage 40 in dependence of the displacement of displacement body 38 for defining a venturi constriction between mixing passage 40 and displacement body 38. Specifically, said venturi constriction is defined between an inner mixing passage wall 62 of mixing passage 40 and immersion section outer wall 58 of immersion section 54.

In some embodiments, immersion section outer wall 58 may be half-venturi shaped as illustrated in the exemplary embodiment shown in Fig. 2.

As mentioned before, displacement body 38 is displaceable into mixing passage 40. In the shown configuration, displacement body 38 is pivotally displaceable into mixing passage 40. Specifically, displacement body 38 is pivotally displaceable into mixing passage 40 around a pivot axis 56 being tangential on a circle around central longitudinal axis 48. One skilled in the art will appreciate that various other configurations and mechanisms for displacing a displacement body into a mixing passage may exist. One of which may be a linear displacement. For example, displacement body 38 may be linearly displaceable into mixing passage 40 along a linear axis being perpendicular to the central longitudinal axis 48.

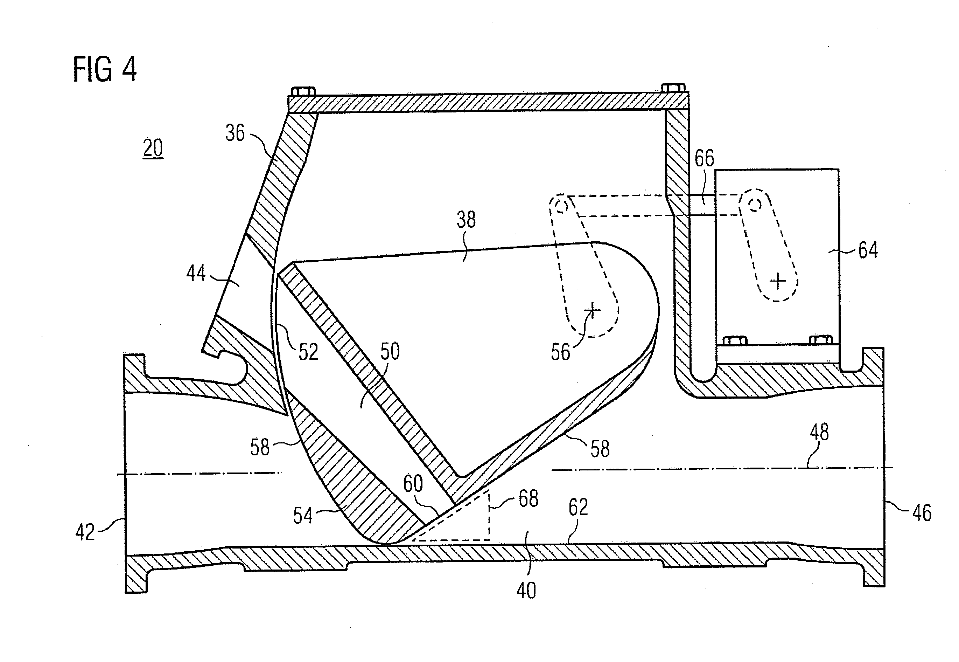

In Fig. 2, displacement body 38 is shown in a first end position which is defined by a substantial fluid isolation between gaseous fuel inlet 44 in housing 36 and mixture outlet 46. Said substantial fluid isolation is achieved by substantially no overlap between gaseous fuel inlet 44 and channel inlet 52. First end position of displacement body 38 is further defined by a fluid connection between air inlet 42 and mixture outlet 46 with a large flow area. In anticipation of Fig. 4, gas mixer 20 is shown in a second end position in which gaseous fuel inlet 44 is fluidly connected to mixture outlet 46 with a large flow area, and air inlet 42 is substantially fluidly isolated from mixture outlet 46.

Inner fuel channel 50 within displacement body 38 further comprises a channel outlet 60 disposed in immersion section outer wall 58 of immersion section 54. For example, channel outlet 60 may be disposed downstream of the venturi constriction defined between immersion section outer wall 58 and inner mixing passage wall 62 of mixing passage 40.

Mixing passage 40 may have a square, a rectangular, or a circular cross section area. Depending on the shape of said cross section area of mixing passage 40, shape of displacement body 38 and, in particular, immersion section 54 may be adapted as both mixing passage 40 and displacement body 38 interact in the described way.

To facilitate displacement of displacement body 38, an adjusting unit 64 is drivingly coupled to displacement body 38. For example, adjusting unit 64 may be attached to an outside of housing 36 and may be connected to displacement body 38 via a rod assembly 66. In the shown configuration, adjusting unit 64 and rod assembly 66 are arranged to pivotally displace displacement body 38 around pivot axis 56 into mixing passage 40.

In some embodiments, adjusting unit 64 may be adapted to infinitely displace displacement body 38. For example, adjusting unit 90 may be a servomotor.

Still further, adjusting unit 64 may be connected to the electronic control module as described in connection with Fig. 1. Depending on gaseous fuel type, and/or operating conditions of gaseous fuel internal combustion engine 1, the electronic control module may provide control information in form of electronic signals to adjusting unit 64, causing adjusting unit 64 to displace displacement body 38 for both varying the overlap of gaseous fuel inlet 44 and channel inlet 52 as well as varying an immersion of displacement body 38 into mixing passage 40.

Additionally or alternatively, user input means may be provided to receive user input of parameters related to a desired operation of gas mixer 20 and gaseous fuel internal combustion engine 1. Those parameters may include, but are not limited to, gaseous fuel type of gaseous fuel in fuel source 16, and/or desired operation of gaseous fuel internal combustion engine 1. Said user input means may be connected to the electronic control module.

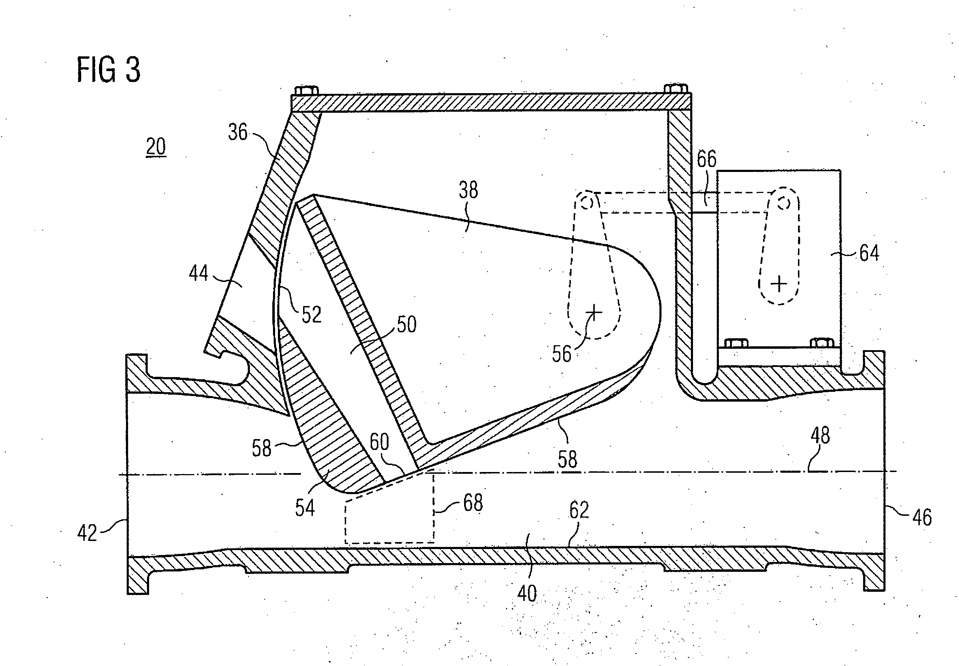

A mixing zone 68 is defined downstream of channel outlet 60 and within mixing passage 40. Extend of mixing zone 68 is variable in dependence of displacement (immersion into mixing passage) of displacement body 38. Mixing zone 68 may be a zone where gaseous fuel and air together form a mixture during operation if the position of displacement body 38 allows flow of both gaseous fuel and air, which is shown, for example, in Fig. 3.

Turning to Fig. 3, displacement body 38 within housing 36 is shown in a position partly allowing flow of gaseous fuel and air during operation.

Specifically, immersion section 54 of displacement body 38 partially immerses into mixing passage 40. During operation, air from air inlet 42 is allowed to flow to mixture outlet 46 with a medium flow area.

As can be seen, gaseous fuel inlet 44 and channel inlet 52 of inner fuel channel within displacement body 38 partly overlap each other. Likewise to the above mentioned air flow, gaseous fuel from gaseous fuel inlet 44 is allowed to flow to mixture outlet 46 with a medium flow area.

Both gaseous fuel from gaseous fuel inlet 44 and air form air inlet 42 mix during operation in mixing zone 68 downstream of channel outlet 60 of inner fuel channel 50.

A second end position of a displacement of displacement body 38 is shown in Fig. 4.

In the shown position of displacement body 38, gaseous fuel inlet 44 and channel inlet 52 overlap, whereas immersion section 54 deeply immerses into mixing passage 40. Deeply as used herein means that displacement of displacement body 38 substantially fluidly isolates air inlet 42 from mixture outlet 46 as immersion section outer wall 58 is in contact with (or alternatively almost in contact with) inner mixing passage wall 62.

### Industrial Applicability

In the following, operation of gaseous fuel internal combustion engine 1 in connection with operation of gas mixer 20 is explained with reference to Figs. 1 to 5.

During operation of gaseous fuel internal combustion engine 1, air from air inlet 18 enters gas mixer 20 at air inlet 42. Gaseous fuel from fuel source 16 enters gas mixer 20 through gaseous fuel inlet 44. The gaseous fuel is mixed into passing air when entering mixing passage 40 in mixing zone 68 through channel outlet 60 of displacement body 38. The air fuel mixture leaves gas mixer 20 through mixture outlet 46 and is guided to intake manifold 22.

Depending on the displacement of displacement body 38, air flow and gaseous fuel flow can be adjusted by the above described adjustment of overlap between gaseous fuel inlet 44 and channel inlet 52 as well as immersion of displacement body 38 into mixing passage 40. Displacement of displacement body 38 is caused by adjusting unit 64.

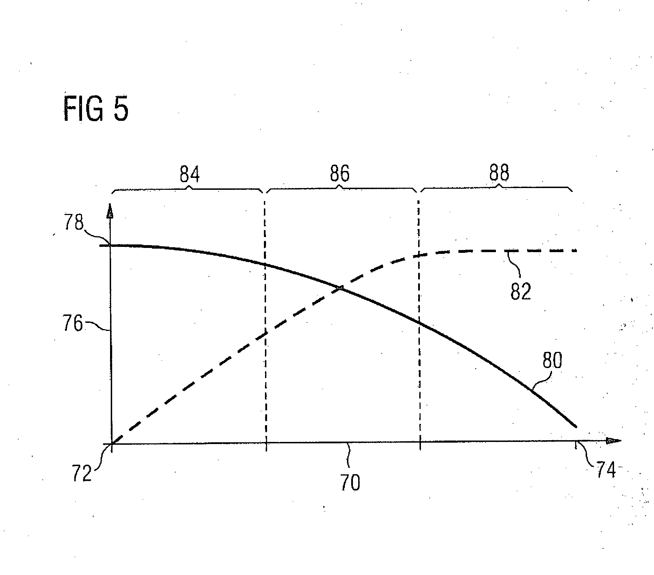

Turning to Fig. 5, an exemplary adjustment of both gaseous fuel flow and air flow by displacement of displacement body 38 is described in the following.

The axis of abscissa 70 indicates a displacement of displacement body 38 within a range from a first end position in point of origin 72 to a second end position 74. The axis of ordinate 76 indicates a flow area within a range from a substantially closed state with a substantial fluid isolation in the point of origin 72 to a substantially opened state with a large flow area at reference numeral 78.

Graph 80 indicates an air flow from air inlet 42 to mixture outlet 46 in dependence of the displacement of displacement body 38, whereas graph 82 indicates a gaseous fuel flow from gaseous fuel inlet 44 to mixture outlet 46 in dependence of the displacement of displacement body 38.

It can be clearly seen that depending on the displacement of displacement body 38 at a position within a range from first end position to second end position, the AFR is set as the displacement simultaneously affects the air flow and the gaseous fuel flow.

Specifically, in the first end position at reference numeral 72 (which is illustrated in Fig. 2), the gaseous fuel inlet 44 is substantially fluidly isolated from mixture outlet 46, and air inlet 42 is fluidly connected to mixture outlet 46 with a large flow area. Said large flow area results from only a small, preferably none, immersion of displacement body 38 into mixing passage 40. Accordingly, in said first end position, a large flow of air through gas mixer 20 and substantially no flow of gaseous fuel through gas mixer 20 are allowed. Consequently, mixture leaving gas mixer 20 through mixture outlet 46 is substantially formed by air.

On the contrary, in the second end position at reference numeral 74 (which is illustrated in Fig. 4), gaseous fuel inlet 44 is fluidly connected to mixture outlet 46 with a large flow area defined by the overlap of gaseous fuel inlet 44 and channel inlet 52. Air inlet 42 is substantially fluidly isolated from mixture outlet 46. As channel outlet 60 is disposed in immersion section outer wall 58 downstream of the venturi constriction, flow of gaseous fuel is facilitated. Accordingly, in said second end position, a large flow of gaseous fuel through gas mixer 20 and substantially no flow of air through gas mixer 20 are allowed. Consequently, mixture leaving gas mixer 20 through mixture outlet 46 is substantially formed by gaseous fuel.

Furthermore, in Fig. 5, three exemplary operational ranges of rotational displacements and corresponding AFRs are indicated. First range 84 may indicate a practicable operating range of gaseous fuel internal combustion engine 1 for gaseous fuels having high calorific values such as propane. Second range 86 may indicate a practicable operating range for gaseous fuels having medium calorific values such as natural gas, and third range 88 may indicate a practicable operating range for gaseous fuels having low calorific values such as lean gas. For example, the shown position of displacement body 38 in Fig. 3 relates to second range 86 as flow of gaseous fuel and flow of air are allowed at a medium level due to a medium flow area for both flows.

Accordingly, displacement body 38 within gas mixer 20 is capable to provide a wide range of AFRs for numerous gaseous fuel types as gas mixer 20 provides both an air flow metering section and a gaseous fuel flow metering section. The air flow metering section is defined by a depth of immersion of displacement body 38 into mixing passage 40. The gaseous fuel flow metering section is defined by an overlap of gaseous fuel inlet 44 and channel inlet 52 of the inner fuel channel 50 within displacement body 38. Consequently, costly and laborious change of displacement bodies when changing to another gaseous fuel type with a different calorific value can be saved.

In a simple way, both air flow and gaseous fuel flow can be directly adjusted by a sole adjusting unit 64.

The overall structure of gas mixer 20 may further provide a space saving solution of a gas mixer which may be, in particular, relevant for applications having increased package requirements such as vehicle engines.

Additionally, during operation of gaseous fuel engine 1, a pressure drop across mixing passage 40 may be minimized by adjustment of displacement of displacement body 38. A minimized pressure drop across mixing passage 40 may increase efficiency of gaseous fuel engine 1.

Generally, the term "substantially fluidly isolated" as used herein means within a range starting from 0 % to a percentage being considerable small compared to a flow which may be facilitated by a large flow area as also used herein. For example, "substantially fluidly isolated" may mean within a range from 0 % to 1%, 3 %, 5 %, or 7 % of a flow which may be facilitated by a large flow area.

Although the preferred embodiments of this invention have been described herein, improvements and modifications may be incorporated without departing from the scope of the following claims.

## Claims

1. A gas mixer (20) configured to be used in a gaseous fuel internal combustion engine (1) for mixing gaseous fuel and air, comprising:
a housing (36) having an air inlet (42), a gaseous fuel inlet (44), and a mixture outlet (46);
a mixing passage (40) extending between the air inlet (42) and the mixture outlet (46); and
a displacement body (38) arranged in the housing (36) and displaceable into the mixing passage (40), the displacement body (38) having an inner fuel channel (50) fluidly interconnecting the gaseous fuel inlet (44) and the mixing passage (40), wherein the displacement body (38) further comprises an immersion section (54) adapted to immerse into the mixing passage (40) in dependence of the displacement of the displacement body (38) for defining a venturi constriction between the mixing passage (40) and the displacement body (38).

2. The gas mixer (20) of claim 1, wherein the displacement body (38) is displaceable within a range from a first end position to a second end position; and
in the first end position, the gaseous fuel inlet (44) is substantially fluidly isolated from the mixture outlet (46), and the air inlet (42) is fluidly connected to the mixture outlet (46) with a large flow area; and
in the second end position, the gaseous fuel inlet (44) is fluidly connected to the mixture outlet (46) with a large flow area, and the air inlet (42) is substantially fluidly isolated from the mixture outlet (46).

3. The gas mixer (20) of claim 1 or 2, wherein the displacement body (38) partially forms part of the mixing passage (40).

4. The gas mixer (20) of any one of the preceding claims, wherein the inner fuel channel (50) has a channel inlet (52) adapted to overlap the gaseous fuel inlet (44) in dependence of a displacement of the displacement body (38).

5. The gas mixer (20) of any one of the preceding claims, wherein the immersion section (54) has an immersion section outer wall (58) being half-venturi shaped.

6. The gas mixer (20) of claim 5, wherein the inner fuel channel (50) of the displacement body (38) further comprises a channel outlet (60) disposed in the immersion section outer wall (58) of the displacement body (38).

7. The gas mixer (20) of claim 6, wherein the channel outlet (60) is disposed in the immersion section outer wall (58) downstream of the venturi constriction.

8. The gas mixer (20) of any one of the preceding claims, wherein the displacement body (38) is pivotally displaceable into the mixing passage (40); or
wherein the displacement body (38) is linearly displaceable into the mixing passage (40).

9. The gas mixer (20) of any one of claim 1 to claim 7, wherein the mixing passage (40) extends between the air inlet (42) and the mixture outlet (46) along a central longitudinal axis (48), and the displacement body (38) is pivotally displaceable into the mixing passage (40) around a pivot axis (56) being tangential on a circle around the central longitudinal axis (48).

10. The gas mixer (20) of any one of claim 1 to claim 7, wherein the mixing passage (40) extends between the air inlet (42) and the mixture outlet (46) along a central longitudinal axis (9), and the displacement body (38) is linearly displaceable into the mixing passage (40) along a linear axis being perpendicular to the central longitudinal axis (48).

11. The gas mixer (20) of any one of the preceding claims, wherein the inner fuel channel (50) is funnel shaped.

12. The gas mixer (20) of any one of the preceding claims, wherein the mixing passage (40) has a square, rectangular, or circular cross section.

13. The gas mixer (20) of any one of the preceding claims, wherein the displacement body (38) is infinitely displaceable.

14. The gas mixer (20) of any one of the preceding claims, further comprising an adjusting unit (64) drivingly coupled to the displacement body (38).

## Patentansprüche

1. Gasmischer (20), der dazu ausgebildet ist, in einem Gaskraftstoffverbrennungsmotor (1) zum Mischen von Gaskraftstoff und Luft verwendet zu werden, aufweisend:
ein Gehäuse (36) mit einem Lufteinlass (42), einem Gaskraftstoffeinlass (44) und einem Gemischauslass (46),
einen Mischkanal (40), der sich zwischen dem Lufteinlass (42) und dem Gemischauslass (46) erstreckt, und
einen Stellkörper (38), der in dem Gehäuse (36) angeordnet und in den Mischkanal (40) verstellbar ist, wobei der Stellkörper (38) einen Innenkraftstoffkanal (50) umfasst, der den Gaskraftstoffeinlass (44) und den Mischkanal (40) in Fluidverbindung setzt, und der Stellkörper (38) ferner einen Eintauchabschnitt (54) aufweist, der dazu ausgebildet ist, in den Mischkanal (40) in Abhängigkeit von der Verstellung des Stellkörpers (38) zum Festlegen einer Venturi-Einschnürung zwischen dem Mischkanal (40) und dem Stellkörper (38) einzutauchen.

2. Gasmischer (20) nach Anspruch 1, wobei der Stellkörper (38) innerhalb eines Bereiches von einer ersten Endposition zu einer zweiten Endposition verstellbar ist, und
in der ersten Endposition, der Gaskraftstoffeinlass (44) im Wesentlichen von dem Gemischauslass (46) fluidmäßig getrennt ist, und der Lufteinlass (42) mit einem großen Strömungsquerschnitt in Fluidverbindung mit dem Gemischauslass (46) steht,
in der zweiten Endposition, der Gaskraftstoffeinlass (44) mit einem großen Strömungsquerschnitt in Fluidverbindung mit dem Gemischauslass (46) steht, und der Lufteinlass (42) im Wesentlichen von dem Gemischauslass (46) fluidmäßig getrennt ist.

3. Gasmischer (20) nach Anspruch 1 oder 2, wobei der Stellkörper (38) teilweise einen Abschnitt des Mischkanals (40) ausbildet.

4. Gasmischer (20) nach einem der vorherigen Ansprüche, wobei der Innenkraftstoffkanal (50) einen Kanaleinlass (52) aufweist, der dazu ausgebildet ist, mit dem Gaskraftstoffeinlass (44) in Abhängigkeit von einer Verstellung des Stellkörpers (38) zu überlappen.

5. Gasmischer (20) nach einem der vorherigen Ansprüche, wobei der Eintauchabschnitt (54) eine Eintauchabschnittaußenwand (58) mit einer Halbventuriform umfasst.

6. Gasmischer (20) nach Anspruch 5, wobei der Innenkraftstoffkanal (50) des Stellkörpers (3 8) ferner einen Kanalauslass (60) aufweist, der in der Eintauchabschnittaußenwand (58) des Stellkörpers (38) angeordnet ist.

7. Gasmischer (20) nach Anspruch 6, wobei der Kanalauslass (60) in der Eintauchabschnittaußenwand (58) stromabwärts von der Venturi-Einschnürung angeordnet ist.

8. Gasmischer (20) nach einem der vorherigen Ansprüche, wobei der Stellkörper (38) in den Mischkanal (40) verschwenkbar ist, oder
wobei der Stellkörper (3 8) linear in den Mischkanal (40) verstellbar ist.

9. Gasmischer (20) nach einem der Ansprüche 1 bis 7, wobei sich der Mischkanal (40) zwischen dem Lufteinlass (42) und dem Gemischauslass (46) entlang einer Mittellängsachse (48) erstreckt, und der Stellkörper (38) in den Mischkanal (40) um eine Schwenkachse (56) verschwenkbar ist, die tangential auf einem Kreis um die Mittellängsachse (48) liegt.

10. Gasmischer (20) nach einem der Ansprüche 1 bis 7, wobei sich der Mischkanal (40) zwischen dem Lufteinlass (42) und dem Gemischauslass (46) entlang einer Mittellängsachse (9) erstreckt, und der Stellkörper (38) linear in den Mischkanal (40) entlang einer Linearachse, die senkrecht zu der Mittellängsachse (48) verläuft, verstellbar ist.

11. Gasmischer (20) nach einem der vorherigen Ansprüche, wobei der Innenkraftstoffkanal (50) trichterförmig ist.

12. Gasmischer (20) nach einem der vorherigen Ansprüche, wobei der Mischkanal (40) einen viereckigen, fünfeckigen oder kreisrunden Querschnitt aufweist.

13. Gasmischer (20) nach einem der vorherigen Ansprüche, wobei der Stellkörper (38) stufenlos verstellbar ist.

14. Gasmischer (20) nach einem der vorherigen Ansprüche, ferner aufweisend eine Verstelleinheit (64), die antreibend mit dem Stellkörper (38) verbunden ist.

## Revendications

1. Mélangeur de gaz (20) configuré pour être utilisé dans un moteur à combustion interne à combustible gazeux (1) pour mélanger un combustible gazeux et de l'air, comprenant :
un boîtier (36) ayant une entrée d'air (42), une entrée de combustible gazeux (44), et une sortie de mélange (46) ;
un passage de mélange (40) s'étendant entre l'entrée d'air (42) et la sortie de mélange (46) ; et
un organe de déplacement (38) agencé dans le boîtier (36) et déplaçable dans le passage de mélange (40), l'organe de déplacement (38) ayant un canal intérieur de combustible (50) reliant mutuellement hydrauliquement l'entrée de combustible gazeux (44) et le passage de mélange (40), dans lequel l'organe de déplacement (38) comprend de plus un tronçon d'immersion (54) adapté pour plonger dans le passage de mélange (40) en fonction du déplacement de l'organe de déplacement (38) pour définir un étranglement en ventury entre le passage de mélange (40) et le corps de déplacement (38).

2. Mélangeur de gaz (20) selon la revendication 1, dans lequel l'organe de déplacement (38) est déplaçable dans une plage allant d'une première position d'extrémité jusqu'à une seconde position d'extrémité ; et
dans la première position d'extrémité, l'entrée de combustible gazeux (44) est sensiblement hydrauliquement isolée de la sortie de mélange (46), et l'entrée d'air (42) est relié hydrauliquement à la sortie de mélange (46) en ayant une grande surface d'écoulement ; et
dans la seconde position d'extrémité, l'entrée de combustible gazeux (44) est reliée hydrauliquement à la sortie de mélange (46) en ayant une grande surface d'écoulement, et l'entrée d'air (42) est sensiblement hydrauliquement isolée de la sortie de mélange (46).

3. Mélangeur de gaz (20) selon les revendications 1 ou 2, dans lequel l'organe de déplacement (38) forme partiellement une partie du passage de mélange (40).

4. Mélangeur de gaz (20) selon l'une quelconque des revendications précédentes, dans lequel le canal intérieur de combustible (50) a une entrée de canal (52) adaptée pour recouvrir l'entrée de combustible gazeux (44) en fonction d'un déplacement de l'organe de déplacement (38).

5. Mélangeur de gaz (20) selon l'une quelconque des revendications précédentes, dans lequel le tronçon d'immersion (54) a une paroi extérieure de tronçon d'immersion (58) qui a une forme de demi-ventury.

6. Mélangeur de gaz (20) selon la revendication 5, dans lequel le canal intérieur de combustible (50) de l'organe de déplacement (38) comprend de plus une sortie de canal (60) disposée dans la paroi extérieure de tronçon d'immersion (58) de l'organe de déplacement (38).

7. Mélangeur de gaz (20) selon la revendication 6, dans lequel la sortie de canal (60) est disposée dans la paroi extérieure de tronçon d'immersion (58) en aval de l'étranglement en ventury.

8. Mélangeur de gaz (20) selon l'une quelconque des revendications précédentes, dans lequel l'organe de déplacement (38) est déplaçable de manière pivotante dans le passage de mélange (40) ;ou
dans lequel l'organe de déplacement (38) est déplaçable linéairement dans le passage de mélange (40).

9. Mélangeur de gaz (20) selon l'une quelconque des revendications 1 à 7, dans lequel le passage de mélange (40) s'étend entre l'entrée d'air (42) et la sortie de mélange (46) le long d'un axe longitudinal central (48), et l'organe de déplacement (38) est déplaçable de manière pivotante dans le passage de mélange (40) autour d'un axe de pivotement (56) qui est tangentiel à un cercle situé autour de l'axe longitudinal central (48).

10. Mélangeur de gaz (20) selon l'une quelconque des revendications 1 à 7, dans lequel le passage de mélange (40) s'étend entre l'entrée d'air (42) et la sortie de mélange (46) le long d'un axe longitudinal central (9), et l'organe de déplacement (38) est déplaçable linéairement dans le passage de mélange (40) le long d'un axe linéaire qui est perpendiculaire à l'axe longitudinal central (48)

11. Mélangeur de gaz (20) selon l'une quelconque des revendications précédentes, dans lequel le canal intérieur de combustible (50) a une forme de tunnel.

12. Mélangeur de gaz (20) selon l'une quelconque des revendications précédentes, dans lequel le passage de mélange (40) a une section transversale carrée, rectangulaire, ou circulaire.

13. Mélangeur de gaz (20) selon l'une quelconque des revendications précédentes, dans lequel l'organe de déplacement (38) est déplaçable de manière infinie.

14. Mélangeur de gaz (20) selon l'une quelconque des revendications précédentes, comprenant de plus une unité d'ajustement (64) reliée par entraînement à l'organe de déplacement (38).
